# EUROPÄISCHE PATENTSCHRIFT

(11) **EP 3 808 491 B1**
(45) Veröffentlichungstag und Bekanntmachung des Hinweises auf die Patenterteilung: **08.11.2023**
(21) Anmeldenummer: 20195176.1
(22) Anmeldetag: 09.09.2020
(51) Int. Cl.: B23K 11/20, B23K 11/24, B23K 11/25, B23K 101/00, B23K 11/11, B23K 103/20

(54) **VERFAHREN ZUM WIDERSTANDSSCHWEISSEN VON WERKSTÜCKEN**
METHOD FOR THE RESISTANCE WELDING OF WORKPIECES
PROCÉDÉ DE SOUDAGE PAR RÉSISTANCE DES PIÈCES

(30) Priorität: 16.10.2019 DE 102019215887
(43) Veröffentlichungstag der Anmeldung: 21.04.2021
(73) Patentinhaber: Robert Bosch GmbH, 70442 Stuttgart (DE)
(72) Erfinder: Groll, Timo, 64720 Michelstadt - Wuerzberg (DE); Haeufgloeckner, Juergen, 63936 Schneeberg (DE)

(56) Entgegenhaltungen:
- DE-A1- 4 133 317
- DE-A1- 19 917 896
- DE-A1-102017 119 242
- DE-C2- 4 133 317
- DE-T2- 69 919 819

## Beschreibung

Die vorliegende Erfindung betrifft ein Verfahren zum Widerstandsschweißen von Werkstücken sowie eine Steuereinheit, ein Schweißgerät und ein Computerprogramm zu dessen Durchführung.

### Stand der Technik

Mittels Schweißprozessen wie beispielsweise dem Widerstandsschweißen können Werkstücke stoffschlüssig miteinander verbunden werden. Beispielsweise werden im Zuge des automatisierten Karosserierohbaus durch robotergeführte Schweißzangen unterschiedliche Werkstücke, z.B. Bleche, mittels Widerstandsschweißen miteinander verschweißt.

Im Zuge des Widerstandsschweißens werden zunächst während einer sog. Kraftaufbauphase zwei Schweißelektroden einer Schweißzange mit Hilfe eines Elektrodenantriebs gegen einen Schweißpunkt der Werkstücke gepresst, bis eine vorgegebene Elektrodenkraft erreicht ist. Anschließend erfolgt der eigentliche Schweißprozess, im Zuge dessen die Schweißelektroden für die Dauer einer vorgegebenen Schweißzeit bzw. Stromzeit mit einem Schweißstrom bestromt werden, wodurch eine Widerstandserwärmung der beiden zu verschweißenden Werkstücke zwischen den Schweißelektroden erfolgt und die Werkstücke bis zum Erreichen einer erforderlichen Schweißtemperatur erhitzt werden. Nach dem Ende der Schweißzeit und nachdem die Bestromung der Schweißelektroden beendet wurde, erfolgt die sog. Nachhaltephase, während welcher die Schweißelektroden noch mit der Elektrodenkraft gegen den Schweißpunkt der Werkstücke gepresst, aber nicht mehr mit dem Schweißstrom bestromt werden.

Beispielsweise ist aus der DE 699 19 819 T2 eine Schweißzange bekannt bestehend aus einer beweglichen Seite einschließlich einer Bewegungsseiten-Schweißspitze und einer Antriebsvorrichtung zum Antreiben dieser Bewegungsseiten-Schweißspitze; und einer festen Seite einschließlich einer Festseiten-Schweißspitze und eines Arms, der diese Festseiten-Schweißspitze hält, wobei ein Festseiten-Sensor zur Erkennung einer Position dieser Festseiten-Schweißspitze und/oder einer Druckkraft, die in diese Festseiten-Schweißspitze eingeleitet wird, in dieser festen Seite vorgesehen ist.

### Offenbarung der Erfindung

Vor diesem Hintergrund werden ein Verfahren zum Widerstandsschweißen von Werkstücken sowie eine Steuereinheit, ein Schweißgerät und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Schweißelektroden werden mit Hilfe eines Elektrodenantriebs mit einer Elektrodenkraft gegen einen Schweißpunkt der Werkstücke gepresst und im Zuge eines Schweißprozesses werden die Schweißelektroden mit einem Schweißstrom bestromt.

Während der Bestromung der Schweißelektroden werden ein erster zeitlicher Verlauf eines mit einer Schweißelektrodenposition verknüpften Lageistwerts und ein zweiter zeitlicher Verlauf eines Drehmoments des Elektrodenantriebs bestimmt.

Der erste zeitliche Verlauf und der zweite zeitliche Verlauf werden jeweils auf charakteristische Merkmale hin untersucht und eine Dauer der Bestromung der Schweißelektroden wird in Abhängigkeit von einem Auftreten der charakteristischen Merkmale bestimmt bzw. angepasst.

Der Erfindung liegt die Erkenntnis zugrunde, dass die Schweißzeit, also die Zeitdauer, während welcher die Schweißelektroden im Zuge des Schweißprozesses mit dem Schweißstrom bestromt werden, in Abhängigkeit von der Position der Schweißelektroden und dem Drehmoment des Antriebs während des Schweißvorgangs angepasst werden kann.

Als mit einer Schweißelektrodenposition verknüpfter Lageistwert sei insbesondere die aktuelle Lage bzw. Position einer oder beider Schweißelektroden oder eines die Schweißelektrode(n) bewegenden Antriebs zu verstehen. Beispielsweise kann der Lageistwert relativ zu dem Schweißpunkt bzw. den Werkstücken bestimmt werden oder zweckmäßigerweise auch in Relation zu einem Referenzpunkt des Schweißgeräts, insbesondere zu einer Ruhelage der Schweißelektroden bzw. des Antriebs. Insbesondere charakterisiert der Lageistwert die Position der Elektrodenkappen im Raum. Ferner wird insbesondere nur eine Achse betrachtet, zweckmäßigerweise eine Achse in Bewegungsrichtung der Elektroden, welche durch einen Lageistwert eines die Elektrodenzange (z.B. C-Zange oder X-Zange) öffnenden und schließenden Antriebs gegeben sein kann.

Als Drehmoment bzw. Drehmomentistwert des Elektrodenantriebs sei insbesondere ein Drehmoment zu verstehen, welches von einem Motor des Elektrodenantriebs, beispielsweise von einem Servomotor, an eine Antriebsspindel o.ä. des Elektrodenantriebs abgegeben wird, wodurch die Schweißelektroden mit einer entsprechenden Zangenschließgeschwindigkeit bewegt werden.

Im Rahmen der vorliegenden Erfindung wurde erkannt, dass sich die zeitlichen Verläufe des Lageistwerts und des Drehmoments besonders eignen, um auf eine Qualität bzw. einen Fortschritt des Schweißprozesses rückzuschließen. Insbesondere wurde erkannt, dass sich die Qualität bzw. der Fortschritt des Schweißprozesses in spezifischen, charakteristischen Merkmalen dieser zeitlichen Verläufe niederschlägt. Ferner wurde insbesondere erkannt, dass, die jeweiligen charakteristischen Merkmale in den zeitlichen Verläufen des Lageistwerts und des Drehmoments auftreten, wenn die Schweißelektroden ausreichend lange mit dem Schweißstrom bestromt wurden, so dass die Werkstücke an dem Schweißpunkt mit einer vorgegebenen, gewünschten Qualität miteinander verbunden wurden.

Im Zuge des vorliegenden Verfahrens wird somit besonders zweckmäßig überprüft, ob und wann die jeweiligen charakteristischen Merkmale in den zeitlichen Verläufen auftreten. Das Auftreten der charakteristischen Merkmale sowie ferner insbesondere die Zeitpunkte ihres Auftretens relativ zueinander werden im Rahmen des vorliegenden Verfahrens zweckmäßigerweise als Indikatoren verwendet, ob die Werkstücke am Schweißpunkt bereits mit ausreichend guter Qualität verschweißt wurden und ob die Bestromung der Schweißelektroden somit beendet werden kann. Somit lässt sich im Rahmen des vorliegenden Verfahrens besonders zweckmäßig eine optimale bzw. bestmögliche Schweißzeit des Schweißprozesses dynamisch bzw. online während des Schweißprozesses selbst bestimmen bzw. anpassen.

Herkömmlicherweise bedarf es zumeist manueller Eingriffe, um die optimale Schweißzeit für einen spezifischen Schweißpunkt zu ermitteln. Insbesondere hängt die optimale Schweißzeit zumeist von den Materialien der zu verschweißenden Werkstücke sowie deren Blechdickenkombination (BDK) ab, also von den Dicken der zu verschweißenden Werkstücke. Ferner können sich auch Störgrößen auf die optimale Schweißzeit auswirken, beispielsweise Kappenverschleiß, Blechstreuungen, Klebstoff, Fräsprobleme, Kraftschwankungen, ungünstige Kühlung oder Nebenschluss (d.h. Fluss des Schweißstroms nicht vollständig durch den Schweißpunkt). Herkömmlicherweise wird daher zumeist jeder einzelne Schweißpunkt manuell geprüft und eingestellt, etwa mittels einer zerstörenden Prüfung oder einer Prüfung per Ultraschall. Somit wird herkömmlicherweise zumeist für jeden einzelnen Schweißpunkt offline die jeweilige Schweißzeit manuell bestimmt, was mit hohem Zeit- und Arbeitsaufwand verbunden ist.

Durch das vorliegende Verfahren kann die bestmögliche Schweißzeit hingegen zweckmäßigerweise automatisch online (d.h. während des Schweißvorgangs) bestimmt werden, insbesondere ohne manuelle Eingriffe, was mit einer erheblichen Zeit- und Aufwandsersparnis verbunden ist. Materialien und Dicken der zu verscheißenden Werkstücke sowie ferner potentielle Störgrößen werden im Zuge des Verfahrens zweckmäßigerweise automatisch berücksichtigt. Die charakteristischen Merkmale deuten in den zeitlichen Verläufen des Lageistwerts und des Drehmoments zweckmäßigerweise unabhängig von Werkstückmaterialien, Blechdickenkombinationen sowie gegebenenfalls aufgetretenen Störgrößen darauf hin, dass eine optimale Schweißverbindung mit einer gewünschten Qualität erreicht wurde. Lageistwert und Drehmoment stellen daher einen besonders zweckmäßigen Indikator für die bestmögliche Schweißzeit dar.

Beispielsweise können die zeitlichen Verläufe explizit nach den jeweiligen charakteristischen Merkmalen untersucht werden, d.h. es wird zweckmäßigerweise überprüft, ob in den zeitlichen Verläufen die jeweiligen charakteristischen Merkmale erkannt werden können. Alternativ oder zusätzlich ist es auch denkbar, die zeitlichen Verläufe jeweils mit einem Referenzverlauf zu vergleichen, welcher jeweils einen Schweißprozess mit gewünschter Qualität repräsentiert und die entsprechenden Merkmale aufweist.

Erfindungsgemäß wird der erste zeitliche Verlauf auf ein erstes charakteristisches Merkmal hin untersucht und der zweite zeitliche Verlauf wird auf ein zweites charakteristisches Merkmal hin untersucht. Wenn die Schweißverbindung der Werkstücke am Schweißpunkt mit einer gewünschten Qualität erzeugt wurde, tritt zweckmäßigerweise sowohl in dem Verlauf des Lageistwerts als auch des Drehmoments jeweils ein individuelles Merkmal auf. Werden diese beiden Merkmale erkannt, kann die Bestromung der Schweißelektroden zweckmäßigerweise beendet werden.

Erfindungsgemäß wird der erste zeitliche Verlauf auf das erste charakteristische Merkmal hin untersucht und, wenn das erste charakteristische Merkmal in dem ersten zeitlichen Verlauf erkannt wird, wird erfindungsgemäß der zweite zeitliche Verlauf auf das zweite charakteristische Merkmal hin untersucht. Insbesondere ist somit nicht nur das Auftreten der einzelnen Merkmale in den zeitlichen Verläufen von Bedeutung, sondern auch deren Relation zueinander. Zweckmäßigerweise beeinflusst eine erfolgreich erzeugte Schweißverbindung am Schweißpunkt zunächst den Verlauf des Lageistwerts in einer ersten charakteristischen Weise und daraufhin den Drehmomentverlauf in einer zweiten charakteristischen Weise.

Besonders bevorzugt wird der zweite zeitliche Verlauf ferner daraufhin untersucht, ob das zweite charakteristische Merkmal innerhalb eines vorgegebenen Zeitintervalls nach einem Zeitpunkt des Auftretens des ersten charakteristischen Merkmals auftritt. Insbesondere folgt das zweite Merkmal bei einer erfolgreich hergestellten Schweißverbindung unmittelbar auf das erste Merkmal bzw. in relativ kurzem Zeitabstand. Beispielsweise kann das vorgegebene Zeitintervall 100 ms betragen, insbesondere 75 ms, weiter insbesondere 50 ms. Besonders zweckmäßig wird anhand des vorgegebenen Zeitintervalls überprüft, ob das erste charakteristische Merkmal und das zweite charakteristische Merkmal innerhalb desselben Stromblocks (d.h. während einer zusammenhängenden Bestromung) auftreten.

Erfindungsgemäß wird der erste zeitliche Verlauf auf ein, einen maximalen Elektrodenabstand kennzeichnendes Extremum als charakteristisches Merkmal hin untersucht. Dem liegt die Erkenntnis zugrunde, dass sich die Elektroden während des Schweißens aufgrund der Erwärmung der Werkstücke zunächst voneinander entfernen und dann bei Verflüssigung der Werkstücke wieder aufeinander zubewegen. Dabei charakterisiert eine Veränderung des Lageistwerts in die eine Richtung, dass sich die Schweißelektroden aufeinander zubewegen. Entsprechend charakterisiert eine Veränderung des Lageistwerts in die andere Richtung, dass sich die Schweißelektroden voneinander entfernen bzw. weiter von den Werkstücken wegbewegen. Ein Extremum in dem zeitlichen Verlauf des Lageistwerts bedeutet somit, dass die Schweißelektroden ihren größten Abstand während des Schweißprozesses hinter sich haben und die Verflüssigung einsetzt. Insbesondere deutet dies darauf hin, dass die Werkstücke am Schweißpunkt mit ausreichender Qualität verschweißt wurden.

Erfindungsgemäß wird der zweite zeitliche Verlauf auf einen Anstieg als charakteristisches Merkmal hin untersucht. Vorzugsweise wird der zweite zeitliche Verlauf auf einen Anstieg von mehr als 15% untersucht, bevorzugt von mehr als 20%, weiter bevorzugt von mehr als 25%. Ein Anstieg des Drehmoments bedeutet insbesondere, dass der Elektrodenantrieb mehr Leistung aufwenden muss, um die Schweißelektroden mit einer vorgegebenen Elektrodenkraft gegen die Werkstücke zu drücken. Insbesondere deutet dies darauf hin, dass das Material am Schweißpunkt aufgrund der einsetzenden Verflüssigung nachgibt und das Drehmoment des Elektrodenantriebs erhöht werden muss, um die Schweißelektroden weiterhin mit vorgegebener Elektrodenkraft gegen den Schweißpunkt zu pressen. Ein Anstieg des Drehmoments deutet daher insbesondere darauf hin, dass die Werkstücke mit ausreichender Qualität verschweißt wurden.

Ein Anstieg des Drehmoments unmittelbar oder kurz nach einem Maximum des Lageistwerts ist ein besonders zweckmäßiger Indikator dafür, dass die Werkstücke am Schweißpunkt mit gewünschter Qualität verschweißt wurden und dass die Bestromung der Schweißelektroden beendet werden kann.

Vorzugsweise werden die Schweißelektroden wenigstens so lange bestromt, bis die jeweiligen charakteristischen Merkmale in dem ersten zeitlichen Verlauf und in dem zweiten zeitlichen Verlauf erkannt werden. Mit dem Erkennen der Merkmale kann beispielsweise eine sog. Stromabbauphase eingeleitet werden, im Zug derer die Schweißstromstärke bis auf den Wert Null verringert wird.

Bevorzugt wird in Abhängigkeit von den jeweiligen charakteristischen Merkmalen in dem ersten zeitlichen Verlauf und in dem zweiten zeitlichen Verlauf eine Verlängerung und/oder eine Verkürzung einer vorgegebenen Schweißzeit durchgeführt. Die Schweißzeit kann zweckmäßigerweise a priori als Soll-Wert für die Dauer der Bestromung vorgegeben werden. Durch Überwachen der beiden Verläufe der jeweiligen Antriebsparameter kann zweckmäßigerweise während der Bestromung der Schweißelektroden bewertet werden, ob die Schweißzeit ausreichend gewählt wurde oder ob sie zu lang bzw. zu kurz gewählt wurde. Bei Bedarf kann die Schweißzeit daher online während des Schweißprozesses dynamisch angepasst werden. Wenn nach Ablauf der vorgegebenen Schweißzeit die charakteristischen Merkmale noch nicht erkannt wurden, wird zweckmäßigerweise eine Verlängerung der Schweißzeit durchgeführt, bis die Merkmale erkannt wurden. Entsprechend wird die Schweißzeit zweckmäßigerweise verkürzt, wenn die charakteristischen Merkmale bereits vor Ablauf der vorgegebenen Schweißzeit erkannt werden.

Bevorzugt sind die Werkstücke aus Aluminium und/oder Stahl. Die Werkstücke können dabei beispielsweise dünne Bleche mit einer Dicke von insbesondere bis zu 1 mm sein. Ein Widerstandsschweißen derartiger Werkstücke stellt besonders schwierige Anwendungsfälle für eine präzise Schweißprozessregelung dar, insbesondere in Bezug auf die Wahl der bestmöglichen Schweißzeit. Durch die Überwachung der zeitlichen Verläufe von Lageistwert und Drehmoment kann das Widerstandsschweißen in derartigen schwierigen Anwendungsfällen verbessert werden.

Das vorliegende Verfahren bietet sich besonders vorteilhaft für Prozesse an, bei welchem eine Vielzahl von Schweißpunkten mit komplexen, verschiedenen Blechdickenkombinationen miteinander zu verschweißen sind. Beispielsweise eignet sich das Verfahren besonders vorteilhaft für den Karosserierohbau, insbesondere für automatisierte Schweißprozesse im Karosserierohbau, vorzugsweise im Zuge einer Kraftfahrzeugproduktion. Insbesondere werden dabei Bleche miteinander verschweißt, um die Karosserie eines Kraftfahrzeugs herzustellen. Im Zuge des Herstellungsprozesses einer einzigen Karosserie können bis zu mehrere tausend Schweißpunkte mit mehreren hundert verschiedenen Blechdickenkombinationen automatisiert bearbeitet werden, z.B. ca. 5.000 Schweißpunkte mit ca. 700 verschiedenen Blechdickenkombinationen für ein Mittelklasse-Fahrzeug. Durch das Verfahren kann automatisch für jeden dieser einzelnen Schweißpunkte online die bestmögliche Schweißzeit bestimmt werden, zweckmäßigerweise ohne dass es manueller Eingriffe bedarf, etwa ohne zerstörende Prüfung oder ohne offline Prüfung mit Ultraschall. Durch das Verfahren können die einzelnen Schweißpunkte mit bestmöglicher Qualität verschweißt werden.

Eine erfindungsgemäße Steuereinheit (Recheneinheit), z.B. eine Schweißsteuerung eines Schweißgeräts, ist im Anspruch 7 offenbart und ist, insbesondere programmtechnisch, dazu eingerichtet, ein erfindungsgemäßes Verfahren durchzuführen. Die Steuereinheit bzw. Schweißsteuerung kann beispielsweise als SPS (speicherprogrammierbare Steuerung), als NC (Numerical Control) oder CNC (Computerised Numerical Control) ausgebildet sein.

Ein erfindungsgemäßes Schweißgerät zum Widerstandsschweißen ist im Anspruch 8 offenbart und weist insbesondere eine Schweißzange mit Schweißelektroden sowie einen Elektrodenantrieb zum Bewegen der Schweißelektroden auf. Ferner umfasst das Schweißgerät eine bevorzugte Ausgestaltung einer erfindungsgemäßen Steuereinheit.

Auch die Implementierung eines erfindungsgemäßen Verfahrens in Form eines Computerprogramms mit Programmcode zur Durchführung aller Verfahrensschritte, wie im Anspruch 9 offenbart, ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen, der durch die anhängenden Ansprüche definiert wird.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt schematisch eine bevorzugte Ausgestaltung eines erfindungsgemäßen Schweißgeräts, das dazu eingerichtet ist, eine bevorzugte Ausführungsform eines erfindungsgemäßen Verfahrens durchzuführen.
- Figur 2: zeigt schematisch eine bevorzugte Ausführungsform eines erfindungsgemäßen Verfahrens als ein Blockdiagramm.
- Figuren 3 bis 5: zeigen jeweils schematisch zeitliche Verläufe von Parametern eines Schweißgeräts, die jeweils im Zuge einer bevorzugten Ausführungsform eines erfindungsgemäßen Verfahrens bestimmt werden können.

### Detaillierte Beschreibung der Zeichnung

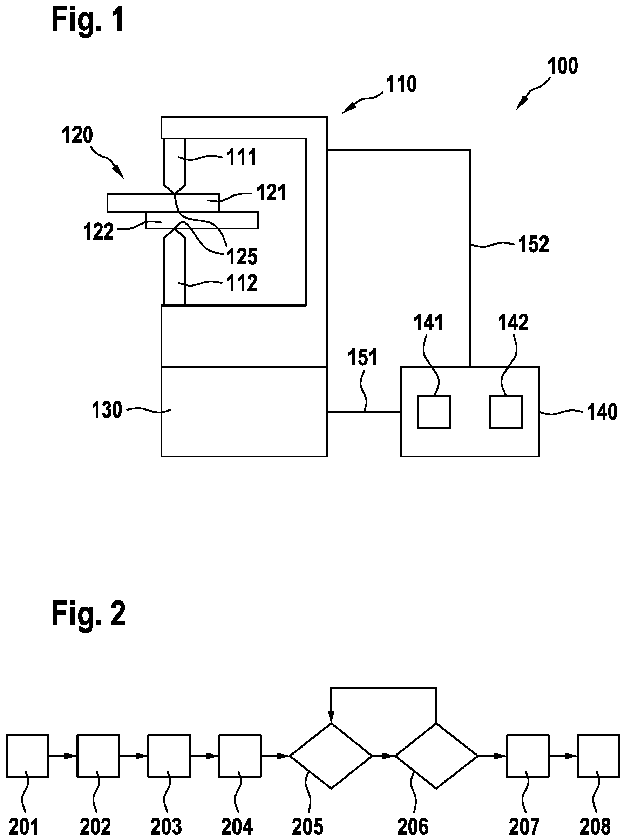

In Figur 1 ist ein Schweißgerät zum Widerstandsschweißen schematisch dargestellt und mit 100 bezeichnet.

Mit dem Schweißgerät 100 können Werkstücke 120 durch Widerstandsschweißen miteinander stoffschlüssig verbunden werden. Insbesondere werden die Werkstücke 120 im Zuge eines Karosserierohbaus miteinander verschweißt, wobei insbesondere eine Karosserie eines Kraftfahrzeugs hergestellt wird. Als Werkstücke werden hier beispielsweise zwei Bleche 121 und 122 aus Aluminium miteinander verschweißt.

Das Schweißgerät 100 weist eine Schweißzange 110 mit zwei Schweißelektroden 111 und 112 auf. Ein Elektrodenantrieb 130 ist vorgesehen, um die Schweißelektroden 111, 112 zu bewegen. In Figur 1 ist die Schweißzange 110 beispielsweise als eine servoelektrische Schweißzange dargestellt mit einem als Servomotor ausgebildeten Elektrodenantrieb 130. Ebenso ist es denkbar, dass der Elektrodenantrieb 130 beispielsweise als Elektromotor, Hydraulikmotor oder Pneumatikmotor ausgebildet sein kann.

Im Zuge des Widerstandsschweißens werden während einer sog. Kraftaufbauphase die Schweißelektroden 111 und 112 mit Hilfe des Elektrodenantriebs 130 mit einer Elektrodenkraft an einem Schweißpunkt 125 gegen die Bleche 121 und 122 gedrückt.

Anschließend werden die Schweißelektroden 111 und 112 während des eigentlichen Schweißprozesses für die Dauer einer Schweißzeit mit einem Schweißstrom bestromt, wodurch eine Widerstandserwärmung der Bleche 121 und 122 am Schweißpunkt 125 erfolgt und es zu einem Verflüssigen der Werkstücke 121, 122 im Schweißpunkt 125 kommt.

Nach dem Ende der Schweißzeit und nachdem die Bestromung der Schweißelektroden 111, 112 beendet wurde, werden die Schweißelektroden 111, 112 im Zuge einer sog. Nachhaltephase noch mit der Elektrodenkraft gegen den Schweißpunkt 125 der Werkstücke 121, 122 gepresst, aber nicht mehr mit dem Schweißstrom bestromt.

Ferner weist das Schweißgerät 100 eine Steuereinheit (Schweißsteuerung) 140 auf, welche beispielsweise als SPS (speicherprogrammierbare Steuerung) ausgebildet sein kann. Die Steuereinheit 140 ist dazu eingerichtet, den Elektrodenantrieb 130 zu regeln, angedeutet durch Bezugszeichen 151, und ferner den Schweißprozess, angedeutet durch Bezugszeichen 152. Zu diesem Zweck werden in der Steuereinheit 140 eine entsprechende Antriebsregelung 141 und eine entsprechende Schweißprozessregelung 142 durchgeführt, welche jeweils als entsprechende Steuerungsprogramme oder auch als ein gemeinsames Steuerungsprogramm implementiert sein können.

Die Steuereinheit 140 ist ferner dazu eingerichtet, die Schweißzeit bzw. die Dauer der Bestromung der Schweißelektroden 111, 112, während des Schweißprozesses online zu bestimmen. Zu diesem Zweck ist die Steuereinheit 140, insbesondere programmtechnisch, dazu eingerichtet, eine bevorzugte Ausführungsform eines erfindungsgemäßen Verfahrens durchzuführen, welche in Figur 2 schematisch als ein Blockdiagramm dargestellt ist und nachfolgend in Bezug auf die Figuren 1 und 2 erläutert wird.

Schritt 201 bezeichnet die Kraftaufbauphase, im Zuge derer die Schweißelektroden 111 und 112 mit Hilfe des Elektrodenantriebs 130 an dem Schweißpunkt 125 gegen die Bleche 121 und 122 gedrückt werden, bis die vorgegebene Elektrodenkraft erreicht ist.

Schritt 202 bezeichnet eine sog. Vorhaltephase, während welcher die Schweißelektroden 111, 112 mit der Elektrodenkraft vor Beginn des Schweißprozesses gegen den Schweißpunkt 125 der Werkstücke 121, 122 gepresst werden, aber noch nicht mit dem Schweißstrom bestromt werden.

In Schritt 203 beginnt der eigentliche Schweißprozess und die Schweißelektroden 111, 112 werden mit dem Schweißstrom bestromt. Die Schweißstromstärke kann dabei zu Beginn der Bestromung beispielsweise im Zuge einer sog. Stromaufbauphase bis zu einem vorgegebenen Wert erhöht werden.

Während der Bestromung der Schweißelektroden 111, 112 werden in Schritt 204 ein erster zeitlicher Verlauf eines Lageistwerts des Elektrodenantriebs 130 als ein mit einer Schweißelektrodenposition verknüpften Lageistwert und ein zweiter zeitlicher Verlauf eines Drehmoments des Elektrodenantriebs 130 bestimmt.

Diese beiden zeitlichen Verläufe werden jeweils auf charakteristische Merkmale hin untersucht und die Dauer der Bestromung der Schweißelektroden 111, 112 wird in Abhängigkeit von einem Auftreten der charakteristischen Merkmale bestimmt bzw. vorgegeben.

In Schritt 205 wird überprüft, ob in dem Verlauf des Lageistwerts ein erstes charakteristisches Merkmal in Form eines einen maximalen Elektrodenabstand kennzeichnenden Extremums, hier z.B. Maximums auftritt. Wenn ein derartiges Maximum erkannt wird, wird in Schritt 206 überprüft, ob in dem Verlauf des Drehmoments ein zweites charakteristisches Merkmal in Form eines Drehmomentanstiegs von beispielsweise mehr als 25% innerhalb eines vorgegebene Zeitintervalls von beispielsweise 50 ms nach dem Zeitpunkt des Auftretens des Maximums des Lageistwerts auftritt.

Wenn innerhalb des Zeitintervalls von 50 ms nach Auftreten des Lageistwertmaximums kein derartiger Drehmomentanstieg erfolgt, wird erneut in Schritt 204 nach einem Maximum des Lageistwerts gesucht. In diesem Fall kann es sich bei dem erkannten Maximum beispielsweise um ein kurzzeitiges, lokales Maximum des Lageistwerts handeln, etwa aufgrund eines Schweißspritzers. Ein derartiges Maximum ohne darauffolgenden Drehmomentanstieg deutet insbesondere nicht darauf hin, dass die Werkstücke 121, 122 am Schweißpunkt 125 bereits mit ausreichender Qualität verschweißt wurden.

Wenn hingegen das Drehmoment innerhalb des Zeitintervalls entsprechend ansteigt, deutet dies darauf hin, dass die Werkstücke 121, 122 an dem Schweißpunkt 125 mit ausreichender Qualität verschweißt wurden. In diesem Fall wird in Schritt 207 die Bestromung der Schweißelektroden 111, 112 beendet. Beispielsweise kann zu diesem Zweck in Schritt 207 eine sog. Stromabbauphase durchgeführt werden, während welcher die Schweißstromstärke bis auf den Wert Null verringert wird.

Nach dem Ende der Bestromung der Schweißelektroden 111, 112 kann in Schritt 208 die Nachhaltephase erfolgen, während welcher die Schweißelektroden 111, 112 noch mit der Elektrodenkraft gegen den Schweißpunkt 125 der Werkstücke 121, 122 gepresst, aber nicht mehr bestromt werden.

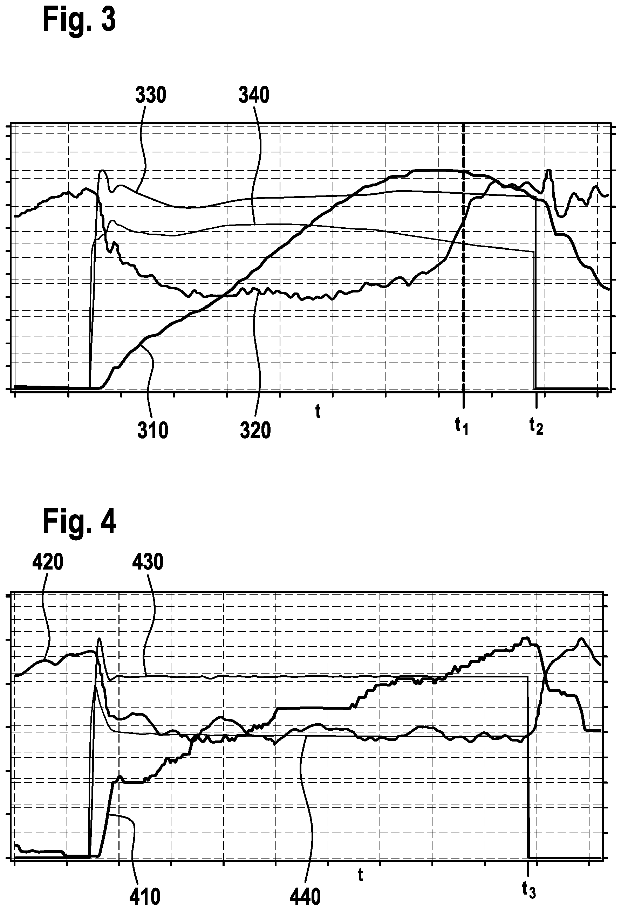

In den Figuren 3 bis 5 sind jeweils zeitliche Verläufe von Parametern eines Schweißgeräts 100 schematisch dargestellt, die im Zuge einer bevorzugten Ausführungsform eines erfindungsgemäßen Verfahrens bestimmt werden können.

Dabei zeigen die Kurven 310, 410 und 510 jeweils den zeitlichen Verlauf der Position bzw. des Lageistwerts des Elektrodenantriebs. Die Kurven 320, 420 und 520 zeigen jeweils einen zeitlichen Verlauf des Drehmoments des Elektrodenantriebs 130. Die Kurven 330, 430 und 530 zeigen jeweils den zeitlichen Verlauf der Schweißstromstärke und die Kurven 340, 440 und 540 jeweils den zeitlichen Verlauf des elektrischen Widerstands.

Figur 3 zeigt den Fall einer optimal gewählten Schweißzeit. Wie zu erkennen ist, weist der Verlauf 310 des Lageistwerts ein Maximum auf, welches zu dem Zeitpunkt t₁ erkennbar wird, Gleichzeitig erfährt der Verlauf 320 des Drehmoments einen deutlichen Anstieg. Danach wird zu dem Zeitpunkt t₂ der Schweißstrom 330 auf den Wert Null reduziert.

Figur 4 zeigt den Fall einer zu kurz gewählten Schweißzeit. In diesem Fall wird der Schweißstrom 430 bereits zu dem Zeitpunkt t₃ noch während der ansteigenden Phase des Lageistwerts 410 auf Null reduziert. Anschließend sinkt der Lageistwert 410 zwar ab, jedoch wegen der Abkühlung der Werkstücke. Eine ausreichende Verflüssigung hat noch nicht stattgefunden. In Folge der Abkühlung erhöht sich auch das Drehmoment, um die Elektroden nachzuführen. In diesem Fall hätte eine Verlängerung der Schweißzeit stattfinden sollen

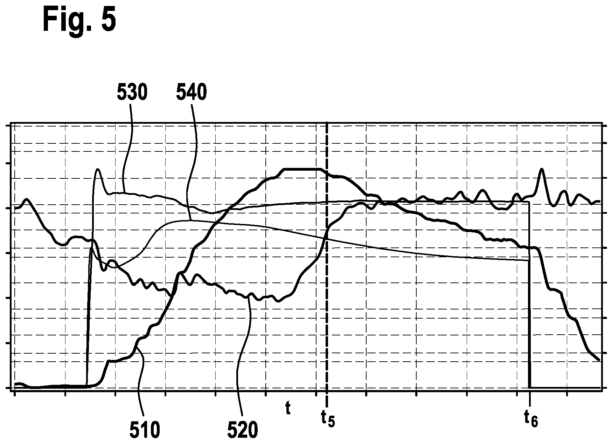

Figur 5 zeigt hingegen den Fall einer zu lang gewählten Schweißzeit. Zu dem Zeitpunkt t₅ wird ein Maximum des Lageistwerts 510 erkennbar, wobei sich gleichzeitig das Drehmoment 520 erhöht. Die Schweißzeit wird jedoch erst zu dem Zeitpunkt t₆ beendet und hätte in diesem Fall verkürzt werden können. Der weitere Abfall des Lageistwerts und das schwingende Drehmoment deuten darauf hin, dass Material aus der Schweißlinse verdrängt wird.

## Patentansprüche

1. Verfahren zum Widerstandsschweißen von Werkstücken (121, 122),
wobei Schweißelektroden (111, 112) mit Hilfe eines Elektrodenantriebs (130) gegen einen Schweißpunkt (125) der Werkstücke (121, 122) gepresst werden und mit einem Schweißstrom bestromt werden (203),
wobei ein erster zeitlicher Verlauf (310, 410, 510) eines mit einer Schweißelektrodenposition verknüpften Lageistwerts bestimmt wird (204) und wobei ein zweiter zeitlicher Verlauf (320, 420, 520) eines Drehmoments des Elektrodenantriebs (130) bestimmt wird (204),
**dadurch gekennzeichnet, dass**
der erste zeitliche Verlauf (310, 410, 510) auf ein, einen maximalen Elektrodenabstand kennzeichnendes Extremum als ein erstes charakteristisches Merkmal hin untersucht wird (205),
wobei, wenn das erste charakteristische Merkmal in dem ersten zeitlichen Verlauf (310, 410, 510) erkannt wird, der zweite zeitliche Verlauf (320, 420, 520) auf einen Anstieg als ein zweites charakteristisches Merkmal hin untersucht wird (206) und
wobei eine Dauer der Bestromung der Schweißelektroden (111, 112) in Abhängigkeit von einem Auftreten der charakteristischen Merkmale bestimmt wird (207).

2. Verfahren nach Anspruch 1, wobei der zweite zeitliche Verlauf (320, 420, 520) ferner daraufhin untersucht wird, ob das zweite charakteristische Merkmal innerhalb eines vorgegebenen Zeitintervalls nach einem Zeitpunkt (t₁, t₃, t₅) des Auftretens des ersten charakteristischen Merkmals auftritt.

3. Verfahren nach Anspruch 1 oder 2, wobei der zweite zeitliche Verlauf (320, 420, 520) auf einen Anstieg von mehr als 15%, bevorzugt von mehr als 20%, weiter bevorzugt von mehr als 25% hin untersucht wird.

4. Verfahren nach einem der vorstehenden Ansprüche, wobei die Schweißelektroden (111, 112) wenigstens so lange bestromt werden, bis die jeweiligen charakteristischen Merkmale in dem ersten zeitlichen Verlauf (310, 410, 510) und in dem zweiten zeitlichen Verlauf (320, 420, 520) erkannt werden (207).

5. Verfahren nach einem der vorstehenden Ansprüche, wobei in Abhängigkeit von den jeweiligen charakteristischen Merkmalen in dem ersten zeitlichen Verlauf (310, 410, 510) und in dem zweiten zeitlichen Verlauf (320, 420, 520) eine Verlängerung und/oder eine Verkürzung einer vorgegebenen Schweißzeit durchgeführt wird (207).

6. Verfahren nach einem der vorstehenden Ansprüche, wobei die Werkstücke (121, 122) aus Aluminium und/oder Stahlblechen gefertigt sind.

7. Steuereinheit (140), die dazu eingerichtet ist, einen Elektrodenantrieb (130) und einen Schweißprozess eines Schweißgeräts (100) zu regeln, und die ferner dazu eingerichtet ist, ein Verfahren nach einem der vorstehenden Ansprüche durchzuführen.

8. Schweißgerät (100) mit einem Elektrodenantrieb (130), Schweißelektroden (111, 112) und mit einer Steuereinheit (140) nach Anspruch 7.

9. Computerprogramm, umfassend Befehle, die bewirken, das die Steuereinheit (140) des Schweißgeräts (100) nach Anspruch 8 veranlasst, ein Verfahren nach einem der Ansprüche 1 bis 6 durchzuführen, wenn es auf der Steuereinheit (140) ausgeführt wird.

10. Maschinenlesbares Speichermedium mit einem darauf gespeicherten Computerprogramm nach Anspruch 9.

## Claims

1. Method for the resistance welding of workpieces (121, 122),
wherein welding electrodes (111, 112) are pressed against a welding point (125) of the workpieces (121, 122) with the aid of an electrode drive (130) and are energized (203) with a welding current,
wherein a first temporal profile (310, 410, 510) of an actual position value linked to a welding electrode position is determined (204), and wherein a second temporal profile (320, 420, 520) of a torque of the electrode drive (130) is determined (204),
**characterized in that**
the first temporal profile (310, 410, 510) is analysed (205) for an extreme value characterizing a maximum electrode spacing as a first characteristic feature,
wherein, if the first characteristic feature is identified in the first temporal profile (310, 410, 510), the second temporal profile (320, 420, 520) is analysed (206) for an increase as a second characteristic feature, and
wherein a period for which the welding electrodes (111, 112) are energized is determined (207) on the basis of an occurrence of the characteristic features.

2. Method according to Claim 1, wherein the second temporal profile (320, 420, 520) is also analysed in order to determine whether the second characteristic feature occurs within a predefined interval of time after a time (t₁, t₃, t₅) at which the first characteristic feature occurs.

3. Method according to Claim 1 or 2, wherein the second temporal profile (320, 420, 520) is analysed for an increase of more than 15%, preferably of more than 20%, more preferably of more than 25%.

4. Method according to one of the preceding claims, wherein the welding electrodes (111, 112) are energized at least until the respective characteristic features are identified (207) in the first temporal profile (310, 410, 510) and in the second temporal profile (320, 420, 520).

5. Method according to one of the preceding claims, wherein a predefined welding time is extended and/or shortened (207) on the basis of the respective characteristic features in the first temporal profile (310, 410, 510) and in the second temporal profile (320, 420, 520).

6. Method according to one of the preceding claims, wherein the workpieces (121, 122) are produced from aluminium and/or steel plates.

7. Control unit (140) which is configured to control an electrode drive (130) and a welding process of a welding device (100) and is also configured to carry out a method according to one of the preceding claims.

8. Welding device (100) having an electrode drive (130), welding electrodes (111, 112) and a control unit (140) according to Claim 7.

9. Computer program comprising instructions which cause the control unit (140) of the welding device (100) according to Claim 8 to carry out a method according to one of Claims 1 to 6 when it is executed on the control unit (140).

10. Machine-readable storage medium having a computer program according to Claim 9 stored thereon.

## Revendications

1. Procédé de soudage par résistance de pièces à travailler (121, 122),
dans lequel des électrodes de soudage (111, 112) sont comprimées à l'aide d'un dispositif d'entraînement d'électrode (130) contre un point de soudage (125) des pièces à travailler (121, 122) et alimentées (203) par un courant de soudage,
dans lequel une première courbe dans le temps (310, 410, 510) d'une valeur réelle de position associée à une position d'électrode de soudage est déterminée (204), et dans lequel une deuxième courbe dans le temps (320, 420, 520) d'un couple du dispositif d'entraînement d'électrode (130) est déterminée (204),
**caractérisé en ce que** la première courbe dans le temps (310, 410, 510) est examinée (205) quant à une valeur extrême caractérisant une distance entre électrodes maximale comme une première particularité caractéristique,
dans lequel, si la première particularité caractéristique est détectée dans la première courbe dans le temps (310, 410, 510), la deuxième courbe dans le temps (320, 420, 520) est examinée (206) quant à une montée comme une deuxième particularité caractéristique, et
dans lequel une durée d'alimentation en courant des électrodes de soudage (111, 112) est déterminée (207) en fonction d'une apparition des particularités caractéristiques.

2. Procédé selon la revendication 1, dans lequel la deuxième courbe dans le temps (320, 420, 520) est en outre examinée pour savoir si la deuxième particularité caractéristique apparaît dans un intervalle de temps prédéfini après un temps (t₁, t₃, t₅) de l'apparition de la première particularité caractéristique.

3. Procédé selon la revendication 1 ou 2, dans lequel la deuxième courbe dans le temps (320, 420, 520) est examinée quant à une montée de plus de 15 %, de préférence de plus de 20 %, de plus grande préférence de plus de 25 %.

4. Procédé selon l'une quelconque des revendications précédentes, dans lequel les électrodes de soudage (111, 112) sont alimentées en courant au moins tant que les particularités caractéristiques respectives sont détectées (207) dans la première courbe dans le temps (310, 410, 510) et dans la deuxième courbe dans le temps (320, 420, 520).

5. Procédé selon l'une quelconque des revendications précédentes, dans lequel une augmentation et/ou une diminution d'un temps de soudage prédéfini est réalisée (207) en fonction des particularités caractéristiques respectives dans la première courbe dans le temps (310, 410, 510) et dans la deuxième courbe dans le temps (320, 420, 520).

6. Procédé selon l'une quelconque des revendications précédentes, dans lequel les pièces à travailler (121, 122) sont fabriquées en aluminium et/ou en tôles d'acier.

7. Unité de commande (140), qui est conçue pour réguler un dispositif d'entraînement d'électrode (130) et un processus de soudage d'un appareil de soudage (100), et qui est en outre conçue pour exécuter un procédé selon l'une quelconque des revendications précédentes.

8. Appareil de soudage (100), comprenant un dispositif d'entraînement d'électrode (130), des électrodes de soudage (111, 112) et une unité de commande (140) selon la revendication 7.

9. Programme informatique, comprenant des instructions qui font que l'unité de commande (140) de l'appareil de soudage (100) selon la revendication 8 effectue un procédé selon l'une quelconque des revendications 1 à 6 lorsque celui-ci s'exécute sur l'unité de commande (140).

10. Support de stockage lisible par machine, comprenant un programme informatique selon la revendication 9 stocké sur celui-ci.
